# EUROPEAN PATENT SPECIFICATION

(11) **EP 1 051 569 B1**
(45) Date of publication and mention of the grant of the patent: **01.10.2003**
(21) Application number: 99902927.5
(22) Date of filing: 27.01.1999
(51) Int. Cl.: F03B 13/08, F03B 11/06

(54) **ENERGY CONVERTER FOR FLOWING FLUIDS AND GASES**
UMWANDLER FÜR FLUIDUMENERGIE
MACHINE, EN PARTICULIER MACHINE ELECTRIQUE, SPECIFIQUEMENT CONVERTISSEUR ENERGETIQUE POUR L'ECOULEMENT DE FLUIDES ET DE GAZ

(30) Priority: 27.01.1998 NL 1008135
(43) Date of publication of application: 15.11.2000
(73) Proprietor: HydroRing B.V., 2243 CR Wassenaar (NL)
(72) Inventor: VAN KAMPEN, Willem Antoon, 2311 TP Leiden (NL)
(74) Representative: Assendelft, Jacobus H.W.
(86) International application number: NL9900046
(87) International publication number: WO99037912

(56) References cited:
- EP-A- 0 462 724
- WO-A-96/31934
- WO-A-97/42414
- DE-A- 3 638 129
- DE-A- 4 425 294
- GB-A- 2 283 285
- US-A- 4 398 773

## Description

The invention is exemplified by an electrical machine, in particular energy converter for flowing fluids and gasses, e.g. with a power ranging between a one or a few or tens horspower and many thousands or even more, one example thereof being described in DE-A-3 638 129. However, the invention can be applied in other fields as well wherein e.g. two substantial co-axial rings rotate with respect to each other.

When converting electrical energy in mechanical energy and vice versa when converting mechanical energy in electrical energy in rotary machines, often the shaft transporting the mechanical energy is rotating with low speed, due to the fact that in many configurations the mechanical drive or the mechanical load rotate at low speed.

An example of a system in which a slowly rotating shaft is used is given by a diesel motor driving as a load the propeller of a ship. In such a combination of elements it is sound engineering practice to apply a low speed of the shaft.

Another example of a system with a slowly rotating shaft is a wind turbine driving as a load a millstone or a waterwheel.

In a conventionally built rotary electrical machine the composing parts are closely placed near a central shaft. When such machines are used, as a motor in order to convert electrical energy into mechanical energy, or as a generator in order to convert mechanical energy into electrical energy, a slowly rotating shaft is a disadvantage because of the low circumferential speed of the rotor versus the stator. A low circumferential speed brings about a low power density of the machine, which may make it necessary to install heavy equipment for a given power level.

In order to increase the power density of the electrical machine, one possible method is to increase the speed of the rotor with respect to the stator. A method frequently applied consists of putting between the electrical machine and a slowly rotating shaft a gearbox in such a way that the shaft of the electrical machine will rotate faster than the slowly turning shaft.

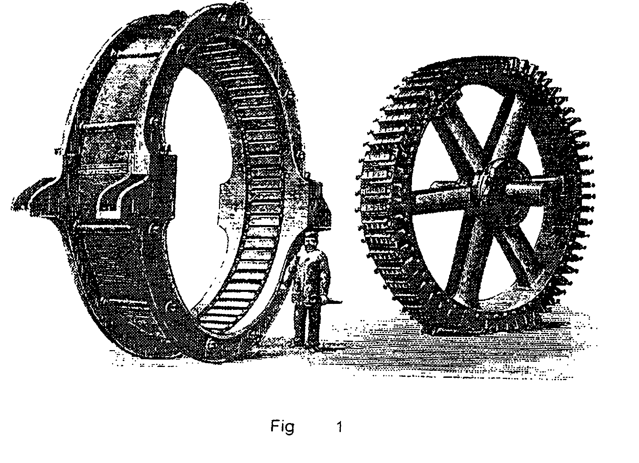

An alternative method to increase the circumferential speed of the rotor with respect to the stator consists of increasing the distance of the rotor from the shaft, providing the electrical machine as a system of two co-axial rings which rotate in relation to one another, the rings incorporating the rotor and the stator of the electrical machine, see fig.1 which is taken from I. Jacobson, "De Elektriciteit en hare techniek", Amsterdam 1905.

Such a configuration of two rings can be applied to convert the energy contained in a fluid flow or contained in a gas flow into electrical energy, or to convert electrical energy into energy in a fluid or gas flow. In these instances the configuration of figure 1 can be changed is such a way, that propeller or turbine blades take the place of the spokes of the rotorwheel, and a medium being gas or fluid flows around those blades, driving the rotor ring in rotation. Nevertheless, the central shaft remains.

A mechanical support of a central shaft of the rotorring requires mechanical parts leading outwardly from the shaft to parts connected with the statorring.

In case of the propeller of a ship, e.g. a commercial ship like an oil tanker of 300 meters length or a marine vessel, the mechanical support will bring about a pulsating disturbance of the waterflow, giving rise to acoustic noise in the water and mechanical vibrations in the shaft and ship's hull.

In case of generating electricity by wind or by a water flow, e.g. with a capacity of some MWatts and blades with a diameter of e.g. 20 meters, the mechanical support of a central shaft will also give rise to a pulsating disturbance in the medium and in the construction.

The disturbance of even flow of the medium brings about a decrease of the efficiency of the power conversion while in many cases acoustic noise is not acceptable.

The construction of a propeller with a mechanical central shaft with bearings, unto which the motor or generator is coupled, leads to a system of propeller and generator which has has considerable dimensions in the direction of the shaft, compared with the diameter of the propeller. In many constructions this is a disadvantage. The bearings of the propeller and the motor/generator have to be in line, which make it necessary to have a stiff support of bearings and motor generator, or, alternatively, include components which accept deviations in position and angle of the propeller shaft and the motor/generator shaft.

Using a rotor at least partly supporting blades extending inward from said rotor and circumfleunt by the fluid or gas, e.g. such that the rotor provides a circumferentially journalled ring with large diameter compared with its length in the axial direction, would have many advantages since the central support of said blades by a shaft can be partly or completely eliminated, eliminating the necessity for said shaft, but brings about construction problems which are prohibitive when use is exclusively made of mechanical bearings.

In general a body cannot be stably supported by a magnetic field of permanent magnets if no additional stabilizing components are added. The same applies for a system of not purposly regulated electromagnets (e.g. providing a not purposly regulated magnetic field, e.g. because they are supplied by constant power). Also, it is not possible to devise a system of several permanent magnets and not purposly regulated electromagnets, which will stably support, and without mechanical contact, a body floating in the magnetic field.

The invention, as further defined in claim 1 or 4 suggests using a magnetic field for at least partly journalling such rotor with respect to its stator. On the one hand, the inventor realised that magnetic forces derived from a magnetic field may increase the static and/or dynamic stability of a rotorring and/or statorring, e.g. mechanically stiffen the rotorring and/or statorring yielding lots of advantages such as said rotorring and/or statorring can be of light weight structure. Adding stability can be in radial and/or axial direction of the rotorring or statorring. A lower limit is that the contribution of the magnetic field to the stability is distinct or beneficial. Preferably, the stability, e.g. flexural stiffness or shape stability of the rotorring and/or statorring is at least 10%, more preferably at least 20% most preferably at least 25% increased by said magnetic field. It is advantageous to have the rotorring and/or statorring as flexible as possible, such that its stability can be virtually completely defined by the magnetic field. Since blades (if used) or other parts (if used) mechanically fastened to the rotorring can add to the stability in one or both directions, it is believed that the magnetic field will give most benefits in stabilizing in the direction not stabilized by such blades. On the other hand the inventor realised that adding a control system, which reacts to the position of a body with respect to a body floating in a magnetic field by changing said magnetic field, the body can be kept in a stable floating position at least partially eliminating the need for a mechanical support of said rotorring.

When a motor/generator is built with comparitively large diameter of the rotorring and the statorring compared with the dimensions of their cross sectional dimensions or their axial dimension, a problem of mechanical stability arises. Such situation occurs when e.g. a rotorring at least partly supports blades extending inward from said rotor and flown by a fluid or gas. The local diameter of the rings may vary at different azimuths along the rings, and the rings may bend such that they do not lie in a plane.

When a central mechanical shaft is applied, the mechanical stability of a large ring around a propeller becomes a further problem. The forces applied to the shaft have to be tranferred by the propeller blades to the rotorring, making it almost sure to introduce an unsolvable problem of stability. Furthermore, the mechanical components which support the shaft, will necessarily be in the way of the flow of the medium.

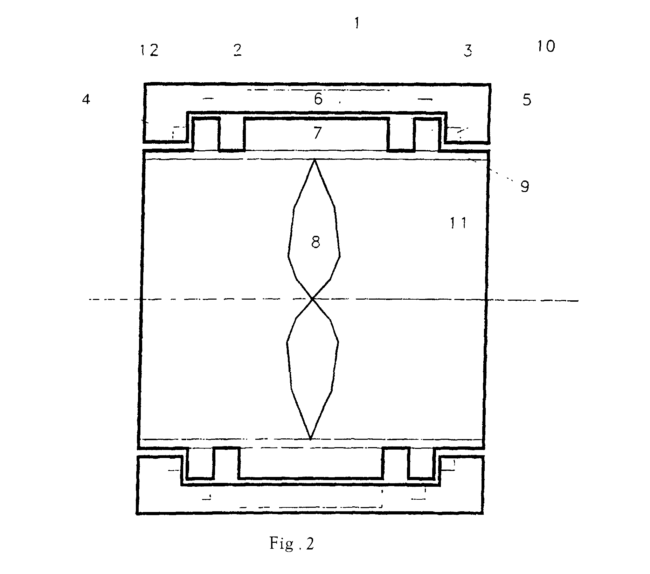

The invention also aims to present further solutions to several problems associated with the application of an annular motor/generator with an integrated fluid or gas driven or driving propeller or plurality of such propellors, in particular in which the diameter of the rotorring and the statorring are large compared with the dimensions of the cross section of the rotorring, see the schematic, cross sectional view of figure 2, showing a non-limiting, presently preferred embodiment of the invention. According to fig 2, the diameter of the rotorring seems small compared to its axial dimension, suggesting a high stiffness of said rotorring based on dimensions and engineering constants. However in real practise, the diameter is at least 3 times the axial dimension, preferably about at least 10 times the axial dimension of the rotorring, yielding a rather instable rotorring necessitating further stabilization for long lasting economic use. On the other hand, the rotorring can be instable at smaller diameter/axial dimension ratios if it is e.g. made of plastics material. In order to provide a solution, a rotorring (9) rotating within a stator 12 is mechanically connected to the propeller (8) driving or driven by the medium and extending inward from said rotorring (9), said rotorring comprising a rotor 7 of an electrical machine and ancres 10 of magnetic means. Said statorring comprises electromagnets (2, 3, 4, 5) of magnetic means connected to control means (not visible) and cooperating with said ancres 10 to provide axial forces and/or rotational forces around two non parallel, preferably crossing, more preferably substantially prependicular axes extending perpendicular to the main axis (11) of the rotorring (9). Also, parts of the magnetic circuits (10) may provide radial forces to control the radial position of the rotorring with regard to the statorring (12). The statorring (12) comprises the stator 6 of the electrical machine, parts of magnetic circuits (5) providing axial and rotational forces exerted on (10). Between (6) and (7) is the gap with a magnetic field of the electrical machine. Radial forces and weak axial forces are provided by parts of the magnetic circuits (2) and (3). Axial forces, rotational forces around two non coinciding axes perpendicular to the main axis of the rotorring, and weak radial forces are provided by parts of the magnetic circuits (4) and (5). The magnetic field in the gap (1) may generate radial forces when the rotorring is not exactly centered with repect to the statorring, or intentionally, when the currents in the stator and rotor of the electrical machine are not evenly distributed azimuthally.

As such, the machine as shown has no journalled central shaft and the blades 8 are merely journalled by the rotorring 9 that is merely magnetically journalled within the statorring 11. Further embodiments are feasible, e.g. in which the elements 7 and 10 do not project into the statorring 12, such that elements 4 and 5 e.g. do not project from the ring 12. Elements 2, 3, 4 and 5 can be partly or completely interchanged with respective elements 10 as well. Or the magnetic means are provided by merely the stator 6 and the rotor 7 of the electrical machine.

## Claims

1. A machine with a high power capacity, comprising: an annular statorring (12); an annular rotorring (9) rotatable within or outside said statorring, at least one blade (8) mounted to said rotorring and being driven by or driving fluid or gas; magnetic means (2, 3, 4, 5) generating magnetic forces between said rotorring and said statorring; means for detecting the position of at least part of said rotorring relative to said statorring; means for controlling said magnetic forces from said magnetic means dependent on said detection by said detection means to hold said rotorring in a stable position relative to said statorring; **characterised in that** said magnetic; means generate attracting magnetic forces between said statorring and said rotorring to hold said rotorring (9) in a stable position relative to said statorring (12).

2. Machine according to claim 1, wherein said attracting magnetic forces increase the shape stability of said rotorring and/or statorring.

3. Machine according to claim 2, wherein the shape stability is increased at a rate of at least 10%.

4. A machine according to any of the proceeding claims, wherein said fluid is environmental air or environmental water.

## Patentansprüche

1. Maschine mit eine höhe Vermögenkapazität, umfassend: einem ringförmigen Statorring (12), einem ringförmigen Rotorring (9), rotierend in oder aussen den Statorring; zumindestens einer Schaufel (8), befestigd an dem Rotorring und angetrieben durch Fluidum oder Gas, oder besagten antreibend; magnetsichen Mitteln (2, 3, 4, 5), Magnetkräfte generierend zwischen dem Rotorring und Statorring; Mitteln zum detectieren der Position zumindestens ein Teil des Rotorringes zum Statorring; Mitteln zum überwachen der Magnetkräfte von den Magnetmitteln abhängig von der Detection von den Detectionmitteln um den Rotorring in eine stabile Position zu halten zum Statorring, **dadurch gekennzeichnet, dass** den Magnetmitteln anziehenden Magnetkräften generieren zwischen dem Stator- und Rotorring um den Rotorring (9) in einer stabielen Position zu halten zum Statorring (12).

2. Maschine gemäss Anspruch 1, wobei die anziehenden Magnetkräfte die Formstabilität des Rotorringes und/oder Statorringes vergrösseren.

3. Maschine gemäss Anspruch 2, wobei die Formstabilität erhöht ist mit zumindestens 10%.

4. Maschine gemäss eine oder mehrere der vorgehenden Ansprüche, wobei das Fluidum Umgebungsluft oder Umgebungswasser ist.

## Revendications

1. Machine avec haute capacité de pouvoir, comprenent: une stator rondelle annulaire (12); une rotor rondelle annulaire (9) tourner interne ou externe de la stator rondelle; au minumum une palette (8), monté à la rotor rondelle et propulsé par fluïdum ou gaz, ou gaz ou fluïdum propulser; moyen aiment (2, 3, 4, 5), générer forces aiment entre la stator rondelle et rotor rondelle; moyen pour détecter la position au minimum une part de la rotor rondelle relative à la stator rondelle; moyen pour controler les forces aiment des moyen aiment dépendent à la détection par les moyen à détection pour maintenir la rotor rondelle dans une position stabilisé relative à le stator rondelle; **caractérisé en ce que** les moyen aiment générer forces aiment attractif entre la stator rondelle et la rotor rondelle pour maintenir la rotor rondelle (9) dans une position stabiliser relative à la stator rondelle (12).

2. Machine selon la revendication 1, les forces aiment attractif augmenter la stabilité de forme de la rotor ou stator rondelle.

3. Machine selon la revendication 2, la stabilité de forme est augmenté avec 10% au minimum.

4. Machine selon l'une quelconque des revendications 1, 2, 3, la fluide est air ambient ou eau ambient.
